# EUROPEAN PATENT APPLICATION

(11) **EP 3 923 182 A1**
(43) Date of publication of application: **15.12.2021**
(21) Application number: 20179861.8
(22) Date of filing: 13.06.2020
(51) Int. Cl.: G06K 9/00, G06K 9/62, A63F 13/86

(54) **METHOD FOR IDENTIFYING A VIDEO FRAME OF INTEREST IN A VIDEO SEQUENCE, METHOD FOR GENERATING HIGHLIGHTS, ASSOCIATED SYSTEMS**

(71) Applicant: Gust Vision, Inc, Dover, Delaware 19901 (US)
(72) Inventor: Schoneveld, Liam, 75009 PARIS (FR)
(74) Representative: Pichon, Julien

(57) **Abstract**

Method for automatically generating a multimedia event on a screen by analyzing a video sequence, wherein the method comprises:
▪ Acquiring a plurality of time-sequenced video frames ({vf_{k,kε[1,N]}} from an input video sequence (VS₁) ;
▪ Applying a learned convolutional neural network (CNN_{L}) to each video frame (vfᵢ₋₁, vfᵢ, vfᵢ₊₁) of the acquired time-sequenced video frames for outputting feature vectors (fᵢ₋₁, fᵢ, fᵢ₊₁), said learned convolutional neural network (CNN_{L}) being learned by a method for training a neural network that comprises :
∘ Applying a convolutional neural network (CNN₁) to some video frames (vf'ᵢ₋₁, vf'ᵢ, vf'ᵢ₊₁) for extracting time-sequenced feature vectors (..., f'ᵢ₋₁, f'ᵢ, f'ᵢ₊₁, ...);
∘ Applying a learned transformation function (LTF₁) that produces at least one predictive feature vector (pfᵢ₊₁) from a subset (SUBᵢ) of the extracted time-sequenced feature vectors (...f'ᵢ₋₂, f'ᵢ₋₁, f'ᵢ,...);

▪ Classifying each feature vector (fᵢ₋₁, fᵢ, fᵢ₊₁) according to different classes (C{i}_{iε[1,P]}) in a feature space said different classes defining a frame classifier (VfC, VsC) ;
▪ Extracting the video frames (vfₚ) that correspond to feature vectors (fₚ) which is classified in one predefined class (C{p}) of the classifier (VfC, VsC).

## Description

### FIELD OF INVENTION

The present invention relates to the methods for identifying a video frame of interest in a video sequence. More specifically, the domain of the invention relates to methods for automatically generating highlights sequences in a video game. Moreover, the invention relates to methods that apply a learned convolutional neural network.

### BACKGROUND OF INVENTION

In recent years, there has been a significant production of multimedia content, particularly video. There is a need to identify and label videos of interest according to a context, specific criteria or user preference, etc.

In video games and related fields, there is a need to identify sequences of interest in a video generated from a video game. More generally, this need also exists in live video production, particularly when it is necessary after recording a live sequence to access some highlights of the video or to summarize the video content.

On the one hand, there exist some methods that allow for the detection of highlights in a video game. One of these methods is described in the patent application US2017228600 - 2017-08-10. In this method a highlight generation module that generates information relating to a status of the video game over time and that able to identify significant portions containing game activity deemed to be of importance. However such methods implement detection of portions of interest based on the status of the video game meeting some predefined conditions such as the score, number of players, achievement of levels, battles or other events, completed objectives, score gap between players, etc.

This method has a first drawback in that its implementation depends on the game play. As a consequence, a new set up must be defined for each additional game context or video game. A second drawback of this method is that it needs to predefine the criteria that are used for selecting the highlights of the video. This leads to generating highlights that may not be those a user would like to generate.

Another method is described in the patent application US20170157512 - 2017-06-08. In that example, virtual cameras are used in order to select highlights in a live video, for example by capturing visual cues, audio cues, and/or metadata cues during the video game. Such virtual cameras are implemented in order to identify highlights by increasing the metadata and they are used to extract some video sequences of interest.

One main drawback of such solutions is that the events of interest should be predefined in order to detect such moments in the video game.

Other approaches are based on machine learning. Modern deep convolutional neural networks (CNNs) have in recent years proven themselves as highly effective in tackling visual recognition and understanding tasks. These approaches naturally lend themselves to the visual sequence modeling, or video understanding tasks we are interested in. These methods, however, usually require vast amounts of training data, which generally needs to be paired with manually-produced human annotations.

There is a need for a method ensuring self-detection of highlight in a live video taking into account a context of the video sequence.

### SUMMARY

**The claims and their advantages are incoporated here after.**

The approach described by the present invention is advantageous, as it allows a meaningful CNN to be trained on video data from a specific domain, with little to no need for human annotations.

According to one aspect, the invention relates to method for automatically generating a multimedia event on a screen by analyzing a video sequence, wherein the method comprises:
▪ Acquiring a plurality of time-sequenced video frames from an input video sequence;
▪ Applying a learned convolutional neural network to each video frame of the acquired time-sequenced video frames for outputting feature vectors, said learned convolutional neural network being learned by a method for training a neural network that comprises:
   ∘ Applying a convolutional neural network to some video frames for extracting time-sequenced feature vectors;
   ∘ Applying a learned transformation function that produces at least one predictive feature vector from a subset of the extracted time-sequenced feature vectors;
▪ Classifying each feature vector according to different classes in a feature space said different classes defining a video frame classifier;
▪ Extracting the video frames that correspond to feature vectors which are classified in one predefined class of the classifier.

The method of the invention is also a computer-implemented method that aims to be processed by a computer, a system, a server, a smartphone, a video game console or a tablet, etc. All the embodiments of the present method are also related to a computer-implemented method.

According to one embodiment, each predicted feature vector is computed in order to predict the features of some other subset of the convolutional neural network features that does not overlap with the subset of the input features to the learned transformation function.

According to one embodiment, the extracted video is associated to a predefined audio sequence which is selected in accordance with the predefined class of the classifier.

According to one embodiment, the method comprises:
▪ Acquiring a plurality of time-sequenced video frames from an input video sequence;
▪ Applying a learned convolutional neural network to each video frame of the acquired time-sequenced video frames for outputting feature vectors and applying a learned transformation function to each the feature vectors, said learned convolutional neural network and learned transformation function being learned by a method for training a neural network that comprises :
   ∘ Applying a convolutional neural network to some video frames for extracting time-sequenced feature vectors
   ∘ Applying a learned transformation function that produces at least one predictive feature vector from a subset of the extracted time-sequenced feature vectors;
▪ Classifying each feature vector according to different classes in a feature space said different classes defining a video sequence classifier;
▪ Extracting a new video sequence comprising at least one video frame that correspond to feature vectors which are classified in one predefined class of the video sequences classifier.

According to one embodiment, the method comprises
▪ Detecting at least one feature vector corresponding to at least one predefined class from a video frame classifier or a video sequence classifier;
▪ Generating a new video sequence automatically comprising at least one video frame corresponding to the at least detected feature vector according to the predefined class, said video sequence having a predetermined duration.

According to one embodiment, the video sequence comprises aggregating video sequences corresponding to a plurality of detected feature vectors according to at least one predefined class, said video sequence having a predetermined duration.

According to one embodiment, the video sequence comprises aggregating video frames corresponding to a plurality of detected feature vector according to at least two predefined classes, said video sequence having a predetermined duration.

According to one embodiment, the extracted video is associated with a predefined audio sequence which is selected in accordance with at least one predefined class of the classifier.

According to one embodiment, the extracted video is associated with a predefined visual effect which is applied in accordance with at least one predefined class of the classifier.

According to one embodiment, the method for training a neural network, comprises:
▪ Acquiring a first set of videos;
▪ Acquiring a plurality of time-sequenced video frames from a first video sequence from the above-mentioned first set of videos;
▪ Applying a convolutional neural network to each video frame of the acquired time-sequenced video frames for extracting time-sequenced feature vectors;
▪ Applying a learned transformation function that produces at least one predictive feature vector from a subset of the extracted time-sequenced feature vectors, said learned transformation function being repeated for a plurality of subsets;
▪ Calculating a loss function, said loss function comprising a computation of a distance between each predicted feature vector and each extracted feature vector for a same-related time sequence video frame;
▪ Updating the parameters of the convolutional neural network and the parameters of the learned transformation function in order to minimize the loss function.

According to one embodiment, the predicted feature vector is computed in order to predict the features of some other subset of the convolutional neural network features that does not overlap with the subset of the input features to the learned transformation function.

According to one embodiment, each video of the first set of videos is video extracted from a computer program having a predefined images library and code instructions that, when applied by said computer program, produced a time-sequenced video scenario.

According to one embodiment, the time-sequenced video frames are extracted from a video at a predefined interval of time.

According to one embodiment, the subset of the extracted time-sequenced feature vectors is a selection of a predefined number of time-sequenced feature vectors and the at least one predictive feature vector correspond(s) to the next feature vector in the sequence of the selected times-sequences feature vectors.

According to one embodiment, a new subset of the extracted time-sequenced feature vectors is computed by selecting a predefined number of time-sequenced feature vectors which overlap the selection of extracted time-sequenced feature vectors of a previous subset.

According to one embodiment, the loss function comprises aggregating each computed distance.

According to one embodiment, the loss function comprises computing a contrastive distance between:
▪ a first distance computed between a predicted feature vector and an extracted feature vector for a same-related time sequence video frame and;
▪ a second distance computed between the predicted feature vector for the same related time sequence video frame and
   ∘ one extracted feature vector corresponding to a previous time sequence video frame, said previous time sequence video frame being selected beyond or after a predefined time window centered on the instant of the same related time sequence video frame or ;
   ∘ one extracted feature vector corresponding to a time sequence video frame of another video sequence,
and comprises aggregating each contrastive distance computed for each time sequence feature vector, said aggregation defining a first set of inputs.

According to one embodiment, the loss function comprises computing a contrastive distance between:
▪ a first distance computed between a predicted feature vector and an extracted feature vector for a same-related time sequence video frame and;
▪ a second distance computed between the predicted feature vector for the same related time sequence video frame and one extracted feature vector chosen in an uncorrelated time window, said uncorrelated time window being defined out of a correlation time window, said correlation time Window comprising at least a predefined number of time sequenced feature vectors in a predefined time window centered on the instant of the same related time sequence video frame,
and comprises aggregating each contrastive distance computed for each time sequence feature vector, said aggregation defining a first set of inputs.

According to one embodiment, the parameters of the convolutional neural network and/or the parameters of the learned transformation function are updated by considering the first set of inputs in order to minimize the distance function.

According to one embodiment, the learned transformation function is a recurrent neural network.

According to one embodiment, the learned transformation uses the technique known as self-attention.

According to one embodiment, updating the parameters of the convolutional neural network and/or the parameters of the learning transformation is realized by backpropagation operations and/or gradient descent operations.

According to another aspect, the invention is related to a system comprising a computer comprising at least one calculator, one memory and one screen. The computer may be a personal computer, a smartphone, a tablet, a video game console. According to one embodiment, the computer is configured for processing the method of the invention in order to provide highlights that are displayed on the screen of the computer

According to one embodiment, the system comprises a server which is configured for processing the method of the invention in order to provide highlights that are displayed on the screen of the computer.

The memory of the computer or of the server is configured for recording the acquired video frames and the calculator is configured for making it possible to carry out the steps of o the invention by processing the learned neural network.

According to another aspect, the invention relates to a computer program product chargeable directly in the internal memory of a digital device, including software code portions for the execution of the steps of the method of the invention when said program is executed on a digital device, a computer, a smartphone, a tablet or a video game console.

The method also concerns a computer-readable medium that comprises software code portions for the execution of the steps of the method of the invention when said program is executed on a digital device, a computer, a smartphone, a tablet or a video game console.

### BRIEF DESCRIPTION OF FIGURES

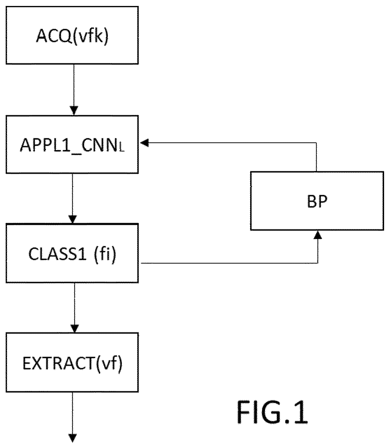

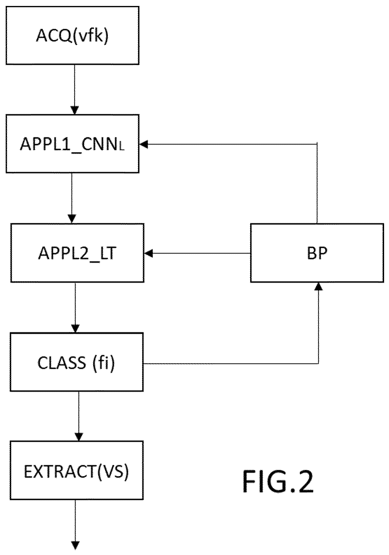

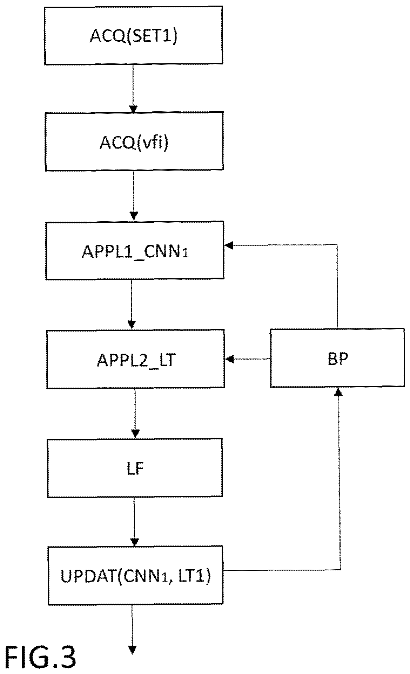

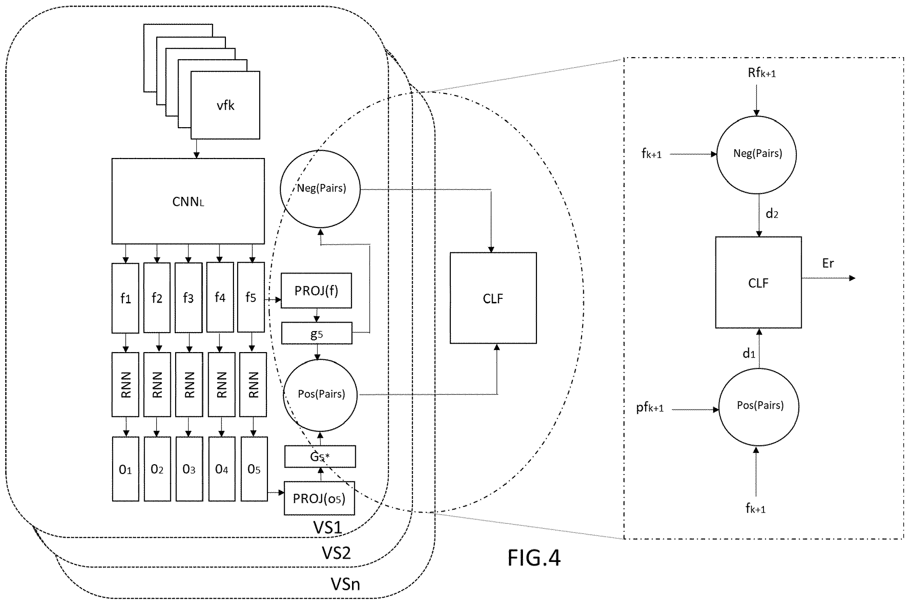

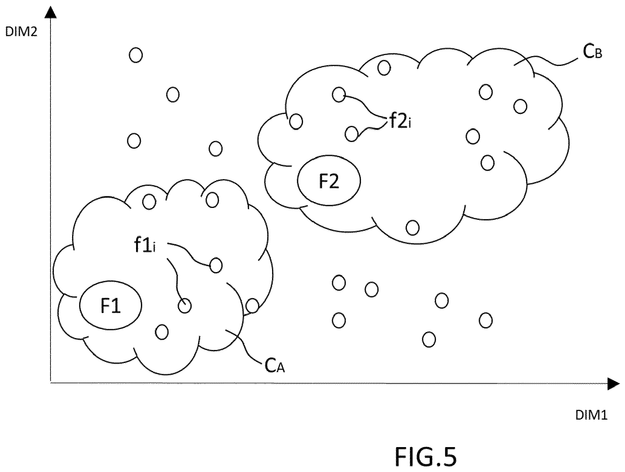

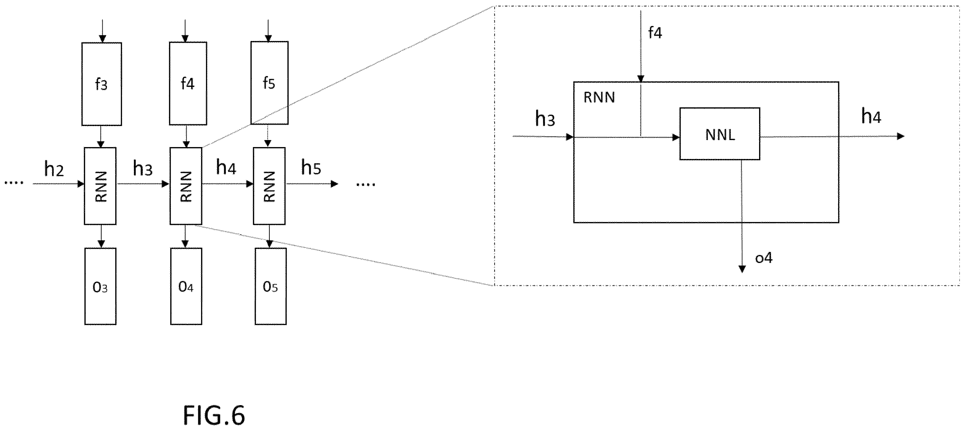

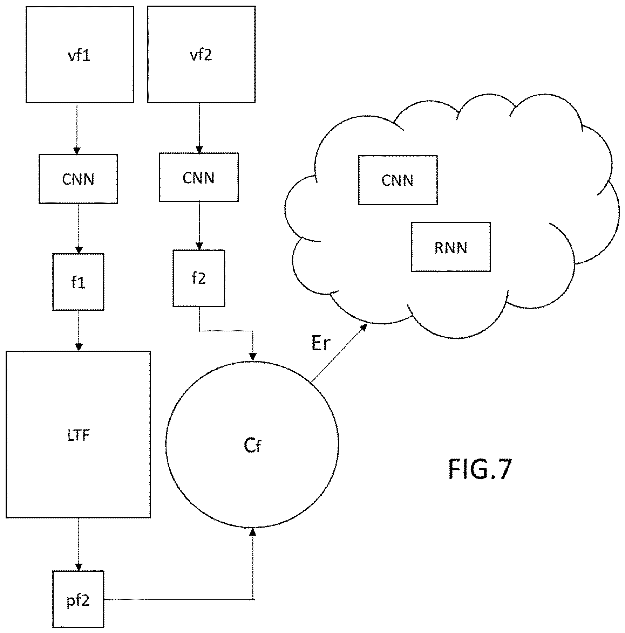

▪ Fig. 1 is a flowchart of the main steps of one embodiment of the method for extracting a video frame of interest in a video.
▪ Fig. 2 is a flowchart of the main steps of one embodiment of the method for generating a video sequence of interest.
▪ Fig. 3 is a flowchart of the main steps of one embodiment of the method for training a neural network that is used for extracting video frame of interest in a video.
▪ Fig. 4 is a schematic representation of an architecture that may be implemented according to one example of the method of the invention.
▪ Fig. 5 is an example of a distribution of features in a feature space or a classifier according to one example of the invention.
▪ Fig. 6 is a schematic view focusing on one example of a recurrent neural network according to one example of the invention.
▪ Fig. 7 is schematic representation of one example of the implementation of a contrastive loss function according to the invention.

### DETAILED DESCRIPTION

In the following description some of the following terminology and definitions are used.

Video frames are noted with the following convention:
▪ {vfₖ}_{kε[1; N]}: a plurality of acquired video frames as inputs of the method;
▪ vfₖ: one acquired video frame as an input of the method;
▪ ...vfᵢ₋₁, vfᵢ, vfᵢ₊₁..._{:} successive acquired video frames;
▪ vfₚ: one extracted video frame of the method as an output of the method, said video frames being classified in a classifier. These video frames may also be considered as video frames of interest.

Feature vectors extracted from the CNN are noted with the following convention:
▪ fₖ: one feature vector computed by a convolutional neural network CNN corresponding to the acquired video frame vfₖ, correspondence should be understood as meaning the same timestamp in the time sequenced video frames;
▪ ...fᵢ₋₁, fᵢ, fᵢ₊₁...: successive feature vectors corresponding to a sequence of acquired video frames vf_{i-1,} vfᵢ, vfᵢ₊₁;
▪ fₚ: one extracted feature vector of the convolutional neural network as an output of the method, said extracted feature vector being classified in a classifier and corresponding to the extracted video frame vfₚ.
▪ pfᵢ : one predicted feature vector by the learned transformation function that is used by the loss function or the contrastive loss function.

Feature vectors extracted from the learned transformation function LTF₁ are noted with the following convention:
▪ ...oᵢ₋₁, oᵢ, oᵢ₊₁...: successive feature vectors outputted from a learned transformation function LTF₁ corresponding to the successive feature vectors fᵢ₋₁, fᵢ, fᵢ₊₁ which themselves correspond to a sequence of acquired video frames vf_{i-1,} vfᵢ, Vf_{i+1;}
▪ oₚ: one extracted feature vector of the learned transformation function LTF₁ which is classified by the method of the invention.

The convolutional neural network used in the application method, described in figures 1 and 2, is named a learned convolutional neural network and noted CNN_{L}.

The convolutional neural network used in the learning method, described in figure 3 is named a convolutional neural network and it is noted CNN₁.

More generally, the properties of a convolutional neural network used in an application method or in as learning method, described in figures 1, 2 and 3 is named a convolutional neural network and it is noted CNN.

Figure 1 represents the main steps of one example of the method of the invention that allows extracting a video frame vfₖ in a video sequence VS₁.

The first step of the method, noted ACQ, comprises the acquisition of a plurality of time-sequenced video frames {vfₖ}_{kε[1; N]} from an input video sequence VS₁. The time-sequenced video frames are noted vfₖ and are called video frames in the description. Each video frame vfₖ is an image that is for example quantified into pixels in an encoded, predefined digital formal such as jpeg or png (portable network graphics) or any digital format that allows encoding a digital image.

### Video frame

According to one embodiment of the invention, the full video sequence VS₁ is segmented into a plurality of video frames vfₖ that are all treated by the method of the invention. According to another embodiment, the selected video frames {vfₖ}_{kε[1; N]} in the acquisition step ACQ of the method are sampled from the video sequence VS according to a predefined sampling frequency. For example, one video frame vfₖ is acquired every second for being processed in the further steps of the method.

The video may be received by any interface, such as communication interface, wireless interface, user interface. The video may be recorder in a memory before being segmented.

For instance, assuming a video sequence VS₁ of 10 min, said video sequence VS₁ being encoded with 25 images/s, the total number of images is about 15000 images. The sampling frequency is set to 1 frame over 25 images, that is the equivalent of considering one frame every second. The acquisition step comprises the acquisition of a time-sequence of N video frames for a single video, with N = 600 video frames in the previous example, with N = 10x60x25/25. According to one example, a training dataset might have N frames per video where N is a number of the order of several hundred or thousands of videos. During a single training example this number may be of the order of 10 or 20 frames.

According to one example, a pre-detection algorithm is implemented in order to select some specific segments of the video sequence VS₁. These segments may be sampled for acquiring video frames vfₖ. According to one example, the sampling frequency may be variable in time. Some labeled timestamps on the video sequence VS₁ may be used for acquiring more video frames in a first segment of the video sequence VS₁ than in a second one. For example, a beginning of a video sequence VS₁ may be sampled with a low sampling frequency and the end of stage in a level of a video game VG₁ may be sampled with a higher sampling frequency.

The video frames vfₖ are used to detect frames of interest vfₚ, also called Fol, which is detailed in figure 1 or to detect subsequences of interest, also called SSol, which is detailed in figure 2 or to improve a learning process of the method of the invention which is detailed in figure 3.

The video frames vfₖ may be acquired from a unique video sequence VS₁ when the method is applied for generating some highlights of said video sequence VS₁ or from a plurality of video sequences VSᵢ, for example, when the method is implemented in a training process of a neural network.

### Convolution Neural Network

The second step of the method of the invention, noted APPL1_CNN on figure 1, comprises applying a learned convolutional neural network, noted CNN_{L} to the input video frames {vfₖ}_{kε[1; N]}.

The CNN processes each acquired video frame vfₖ and is able to extract some feature vectors {fₖ}_{kε[1; N]}. A feature vector fₖ may be represented in a feature space such one represented in figure 5. The feature space of figure 5 comprises 2 dimensions: DIM1 and DIM2. In this example, the feature space comprises two classes C_{A}, C_{B} which are represented. Each class delimits a region gathering vectors that share common properties or the like.

The CNN may be one of the convolutional neural network comprising a multilayer architecture based on the application of successive transformation operations, such as convolution, between said layers. Each input of the CNN, i.e. each video frame vfₖ, is processed through the successive layers by the application of transformation operations. The implementation of a CNN leads to convert an image into a vector.

The goal of a CNN is to transform video frames as inputs of the neural network into a feature space that allows a better classification of said transformed inputs by a classifier VfC, VsC. Another goal is that the transformed data is used to train the neural network in order to increase the recognition of the content of said inputs.

In one embodiment, the CNN comprises a convolutional layer, a non-linearity or a rectification layer, a normalization layer and a pooling layer. According to different embodiments, the CNN may comprise a combination of one or more previous said layers. According to one embodiment, the CNN comprises a backpropagation process for training the model by modifying the parameters of each layer of the CNN. Other derivative architectures may be implemented according to different embodiments of the invention.

According to one implementation, the incoming video frames vfₖ, which are processed by the learned convolutional neural network CNN_{L}, are gathered by successive batches of N incoming video frames, for instance as it is represented in figure 4, a batch may comprise 5 video frames vfₖ. The incoming video frames are processed so as to respect their time sequenced arrangement. According to one example, the CNN is configured to receive continuously batches of 5 video frames vfₖ for being computed through the layers of the CNN_{L}. In such example, each incoming batch of video frames {vfᵢ₋₂, vf_{i-1,} vfᵢ, vf_{i+1,} vfᵢ₊₂} leads to output a batch of the same number of feature vectors {fᵢ₋₂, fᵢ₋₁, fᵢ, fᵢ₊₁, fᵢ₊₂}.

In other examples, the CNN may be configured so that batches comprise between 2 and 25 video frames. According to one example, the batch comprises 4 frames or 6 frames.

According to one embodiment, the CNN is learned to output a plurality of successive feature vectors fᵢ₋₁, fᵢ, fᵢ₊₁, each feature being timestamped according to the acquired time-sequenced video frames vf_{i-1,} vfᵢ, vfᵢ₊₁. The weights of the CNN, and more generally the other learned parameters of the CNN and the configuration data that described the architecture of the CNN are recorded in a memory that may be in a server on the Internet, the cloud or a dedicated server. For some application, the memory is a local memory of one computer.

The learned CNN_{L} is trained before or during the application of the method of the invention according to figures 1 and 2 by the application of two successive functions. The first function is a convolutional neural network CNN₁ applied to some video frames vfₖ for computing time-sequenced feature vectors fₖ. The second function is a learned transformation function LTF₁ that produces at least one predictive feature vector pfᵢ₊₁ from a subset SUBᵢ of the outputted time-sequenced feature vectors {fᵢ}_{iε[W;i]}, where "W" is the set of timestamps defining a correlation time window CW. The correlation time window CW may be defined by the number of feature vectors comprised into the band [f_{w} ; fᵢ] which are used for predicting a predicted feature vector pfᵢ₊₁. In one example, the second function is a recurrent neural network, noted RNN.

The feature vectors fi that are computed by the convolutional neural network CNN₁ and the learned transformation function LTF₁ may be used to train the learned convolutional neural network CNN_{L} model and possibly the RNN model when it is also implemented in the method according to figure 2.

This training process leads to output a learned neural network which is implemented in one video treatment application that minimizes data treatments in automatic video editing process. Such a learned neural network allows outputting relevant highlights in video game. This method also ensures increasing the relevance of the built-in process video frame classifier VfC.

### Backpropagation

Figure 1 represents a feedback loop BP that corresponds to the backpropagation of the learning step of the CNN_{L}. The backpropagation is an operation that aims to evaluate how a change in the kernel weights of the CNN_{L} affects a loss function LF₁. The backpropagation may result as a continuous task that is applied during the extraction of video frames of interest vfₚ.

In other words, the weights of the CNN_{L}, and the learned transformation function LTF₁ when implemented, are updated simultaneously via backpropagation. The updates are derived, for example, by backpropagating a contrastive loss throughout the neural network.

The backpropagation of the method that is used to train the CNN_{L} or the CNN_{L}+ RNN may be realized thanks to a contrastive loss function CLF₁ that predicts a target in order to compare an output with a predicted target. The backpropagation then comprises updating the parameters in the neural network, in a way such that the next time the same input goes through the network, the output will be closer to the desired target.

### Classifier

A third step is a classifying step, noted CLASS. This step comprises classifying each extracted feature vector fₚ, or the respective extracted video frame vfₚ according to different classes C{p}_{pε[1,Z]} of a video frame classifier VfC in a feature space. This classifier comprises different classes C{p} defining a video frame classifier.

A fourth step is an extraction step, noted EXTRACT(vf). This step comprises extracting the video frames vfₚ that correspond to feature vectors fₚ which is classified in at least one class C{p} of the classifier. In the scope of the invention, the extracting step may correspond to an operation of marking, identifying, or annotating these video frames vfₚ. The annotated video frames vfₚ may be used, for example, in an automatic film editing operation for gathering annotated frames of one class of the classifier VfC in order to generate a highlight sequence.

According to the example of figure 2, extracting a video subsequence of interest SSOI comprises selecting a portion of the video sequence timestamped at a video frame vfₚ selected in one classifier VfC. Highlights correspond to short video sequences VSᵢ, herein called video subsequences of interest SSol. According to different embodiments, a highlight may correspond to a short video generated at a video frame vfₚ that is classified in a specific class C{i}_{iε[1,Z]} of the classifier. Such a class may be named Class of Interest CoI.

For instance, the classifier VfC may comprise classes of interest CoI comprising video frames vfₚ related to highlights of a video sequence VS₁. Highlights may appear, for example, at times when many events occur at about the same time in the video sequence VS₁, when a user changes of level in a game play, when different user avatars meet in a scene during high intensity action, when there are collisions of a car, ship or plane or a death of an avatar, etc. One advantage of the classifier of the invention is that classes are dynamically defined in a training process that corresponds to many scenarios which are difficult to enumerate or anticipate.

According to some embodiments, different methods can be used for generating a short video when considering a specific extracted video frame vfₚ. The length of the video sequence SSoI can be a few seconds. For example, the duration of the SSoI may be comprised in the range of 1s and 10s. The SSoI may be generate so that the video frame of interest vfₚ is placed at the middle of the SSoI, or placed at 2/3 of the duration of the SSoI. In one example, the SSoI may start or finish at the VoI.

According to one embodiment, some visual effects may be integrated during the SSoI such as slowdown(s) or acceleration(s), zoom on the user virtual camera, including video of the subsequence generated by another virtual camera different from the user's point of view, an inscription on the picture, etc.

According to one embodiment, the duration of the SSoI depends on the class wherein the FoI is selected. For instance, the classifier VfC or VsC may comprise different classes of Interest C{p}: a class with high intensity actions, class with new appearing events, etc. Some implementations take advantage of the variety of classes that is generated according to the method of the invention. The SSoI may be generated taking into account classes of the classifier. For example, the duration of the SSoI may depend on the classes, the visual effects applied may also depend on the classes, the order of the SSoI in a video montage may depend on the classes, etc.

According to one example, a video a subsequence of interest SSoI is generated when several video frames of interest vfₚ are identified in the same time period. When a time period, for example of few seconds comprises several FoI, a SSoI is automatically generated. This solution may be implemented when some FoI of different classes are detected in the same lapse of time during the video sequence VS₁.

One application of the invention is the automatic generation of films that results from the automatic selection of several extracted video sequences according to the method of the invention. Such films may comprise automatic aggregations of audio sequence, visual effects, written inscriptions such as titles, etc. depending of the classes wherein said extracted video sequences are selected.

### Learned transformation function

Figure 2 represents another embodiment of the invention wherein a learned function LF is implemented after the application of the convolutional neural network, this step is noted APPL2_LT.

In one embodiment, the learned function LT is a recurrent neural network, also noted RNN. The RNN is implemented so that to process the output "fi" of the learned convolutional neural network CNN_{L} in order to output new feature vectors "oi". One advantage of the implementation of recurrent neural network RNN is that it aggregates temporally the transformed data into its own feature extracting process. The connections between nodes of the network of an RNN allows for producing temporal dynamic behavior of the acquired time sequenced video frames. The performance of the classifier is increased by taking into account the temporal neighborhood of a video frame.

According to different examples, the RNN may be one of those variants : Fully recurrent type, Elman Networks and Jordan networks types, Hopfied type, Independently RNN type, recursive type, Neural history compressor type, second order RNN type, long short-term memory (LSTM) type, gated recurrent unit (GRU) type, bi-directional type or a continuous-time type, recurrent multilayer perceptron network type, multiple timescales model type, neural Turing machines type, differentiable neural computer type, neural network pushdown automata type, memristive networks type, transformer type.

According to the invention, the RNN aims to continuously outputt a prediction of the feature vector of the next frame. This prediction function may be applied continuously to a batch of feature vectors fi that is outputted by the CNN_{L}. The RNN may be configured for predicting one output vector oi over a batch of N-1 incoming feature vectors in order to apply in a further step a loss function LF₁, such as contrastive loss function CLF₁.

The implementation of an RNN, or more generally a learned transformation function LTF₁, is used for training the learned neural network of the method of figure 1 or figure 2, it means the CNN_{L} or the {CNN_{L} + LTF₁). In a first embodiment, the learned neural network of the method according to figure 1 and 2 may comprise only a CNN. In a second embodiment, the learned neural network of the method according to figures 1 and 2 may comprise a combination of a CNN and a LTF₁, such as a RNN. In this last case, a learned transformation function LTF₁ is used for improving the detection of FOI or SSOI. The use of a RNN in a method of figure 2 allows aggregating past information for processing the current input fi. The outputted feature vector oᵢ of the RNN is used for improving the training of the method of figure 1 and figure 2 and also for improving a video subsequence classifier or a video frame classifier.

The method of figure 1 or figure 2 may be repeated for each input video sequence VS₁ of a set of video sequences {VSᵢ}_{iε[1, P]}.

It is to be noted that in the example of figure 2 the last step, noted EXTRACT(VS), corresponds to an extraction of video subsequences of interest SSOI from a video sequence classifier VsC. The embodiments of figure 2 may be combined with the embodiments of figure 1. For example, the extraction of video frames vfₚ in figure 1 may be implemented in the method of figure 2 by replacing the step of extracting video subsequences by the step of extracting video frames vfₚ.

A video sequences classifier VsC may be implemented so that it includes a selecting step of classified SSol. This is an alternative to the previous embodiments wherein subsequences of interest SSol were generated from selected FoI from a video frame classifier VfC.

Figure 3 shows an embodiment of the learning process of the invention used for training the CNN_{L} or the CNN_{L} when implemented with an RNN or more generally with a learned transformation function LTF₁. The method of figure 3 is a method for training a neural network such those described in figure 1 or figure 2. The methods of figures 1 and 2 may be trained continuously while it is also used for classifying each newly video frame vfₚ.

According to one embodiment, the method of figure 3 may be trained with a set SET₁ of video sequences {VSᵢ}_{iε[1, P]}. The set of video sequences SET₁ may comprise video sequences with different lengths and coming from different video sources. For example, SET₁ may comprise video sequences VS₁, VS₂, VS₃, etc., each one corresponding to different user instances of a specific video game. One advantage is to train the neural network of the method with a set of video sequences {VSᵢ}_{iε[1, P]} of one specific video game. In another embodiment, different video games may be considered in the training process. In such cases, the model learns features that are more generally useful across many different videogames

One example of an algorithm describing the training loop for one example of a specific implementation of the method of the invention is detailled here after.

In that example, it is considered a database of 10 second video clips from a single videogame, sampled at 1 frame per second. The following sequence is processed until converged or training otherwise complete.
▪ For each batch of B video clips in random_shuffle(database):
▪ let X = the batch of image sequences # X.shape == (B, 10, 3, h, w) == (batch_size, seq_len, RGB, heigh, width)
▪ F = CNN(X) # extract feature vectors of dimension D using CNN, independently for each image in X; F.shape == (B, 10, D)
▪ o = RNN(F[:, -5:-1]) # predicts the last vector in F, based on the 4 vectors before that one; o.shape == (B, D)
▪ pred = Proj(o) # Proj is a two layer neural network that projects to a lower dimension d; pred.shape == (B,d)
▪ f = Proj(F) # we also project f to this lower dimension for comparisons; f.shape == (B, 10, d)
   ∘ loss = 0.0 # initialise the loss
   ▪ for i in 1 ... B
      • pos_score[i] = dot_product(pred[i], f[i, -1]) # we want the prediction to be close to the last vector in the sequence
      • neg_score[i] = exp(dot_product(pred[i], f[i, 0])) # we want the prediction to be far from the first vector in the sequence
      • for j in 1 ... B where j != i # use all feature vectors from all other sequences in the batch as additional negative examples
         ∘ for t in 1 ... 10
            ▪ neg_score[i] += exp(dot_product(**pred**[i], **f**[j, t]))
         ∘ end for
      • end for
      • **loss** -= pos_score / log(neg_score) # contrastive loss
   ▪ end for
   ▪ # backpropagate the loss to the parameters of the **CNN**, **RNN** and **Proj** networks, and do
   ▪ # an update step with stochastic gradient descent, so as to *minimise* the average **loss**: **update**([**CNN**, **RNN**, **Proj**], **loss** / **B**)
▪ end for
   done

In one embodiment, the invention aims to initiate the learning of the neural network which may be continuously implemented when methods of figure 1 or 2 are processed.

The acquisition step ACQ, the application of the CNN_{L} and the application of a learned transformation function LTF₁ in figure 3 may be the same steps described in figure 1 and figure 2.

The RNN is further detailed in figures 3 and 6. It may also be implemented in the methods of figures 1 and 2 as a learned neural network when it is combined with a CNN_{L}.

The loss function LF₁ is detailed in figure 3, figure 4 and figure 7. It is to be noted that the loss function LF₁ may be implemented in the methods of figures 1 and 2 for processing the backpropagation BP with a computation of an error distance Er.

Figure 6 represents one example of how a recurrent neural network RNN may be implemented. An RNN comprises a dynamic loop applied on the inputs of the network allowing information to persist. This dynamic loop is represented by successive "hi" vectors that are applied to the incoming extracted feature vectors fi that coming from the CNN in an ordered sequence as continuous process. In such an architecture, the invention allows connecting past information, such as previous processed extracted feature vectors fi coming from the CNN and allows selecting them from a correlation time window CW. This connecting and selecting tasks allows processing the present extracted feature vector fi from the CNN into the RNN. According to one example the RNN is an LSTM network.

The hi vectors evolve through the neural network layer NNL by successively passing through processing blocs, called activation functions or transfer functions. hᵢ vectors are applied to each new entrance in the learned transformation function LTF₁ for outputting a new feature vector oᵢ.

According to different embodiments, the RNN may comprise one or more network layers. Each node of the layer may be implemented by an activation function such as linear activation function of non-linear activation function. A non-linear activation function that is implemented may be one of those derivative or differential of monotonic function. As an example, the activation functions implemented in the layer(s) of the RNN may be: Sigmoid or logistic activation function, Tanh or hyperbolic tangent Activation Function, ReLU (Rectified Linear Unit) activation Function, Leaky ReLU activation function, GRU (Gated Recurrent Units), or any other activation functions, GRU (Gated Recurrent Units). In one configuration, LSTMs and GRUs which may be implemented with a mix of sigmoid and tanh function.

### Contrastive loss function

According to one embodiment of the invention, a loss function LF₁ is implemented in the method of figure 3 in order to train a neural network. This training process aims to provide a learned neural network that can be used in any application for classifying video sequences, any application for detecting specific video frames vfₚ, or any generating video sequence application. The errors computed by the loss function LF₁ aims to update the parameters of the neural network via backpropagation process. The error is preferably a distance error that is minimized thanks to the learning process.

According to one embodiment, the loss function LF₁ may also be implemented in a method according to figure 1 or figure 2 in order to improve the detection of video frames of interest vfₚ. This detection relies on dynamically analyzing video subsequences by considering past information in the treatment of current information.

According to one embodiment, the loss function LF₁ is a contrastive loss function CLF₁. Figure 4 shows one example of an implementation of contrastive loss function CLF₁.

In the example of figure 4, the CNN and the RNN work as two different modules which deliver outputs that are considered by the contrastive loss function CLF₁.

In this approach, the RNN works as a predicting function wherein the result is an input of the contrastive loss function CLF₁. The prediction function comprises computing a next feature vector oᵢ₊₁ from previous received feature vectors {..., fᵢ₋₂, fᵢ₋₁, fᵢ}, where oᵢ₊₁ is a prediction of fᵢ₊₁. In figure 4, feature vector o₅ is a prediction of the feature vector f₅. This prediction is processed by considering the last four input feature vectors {f₁, f₂, f₃, f₄} and the last four output vectors {o₁, o₂, o₃, o₄}. When the RNN or the leaned transformation function LTF₁ is implemented for predicting an output feature vector oᵢ, that feature vector is noted pfi.

As a convention, the outputs of the RNN or of any equivalent learned transformation function LTF₁, are called {oᵢ}_{iε[1;N]} when the learned transformation function LTF₁ is implemented in an application method for identifying highlights, for example. The outputs of the RNN or any equivalent learned transformation function LTF₁ are called {pfᵢ}_{iε[1;N]} when the learned transformation function LTF₁ is implemented for training the learned neural network {CNN} or {CNNL+LTF).

In other embodiments, the RNN may be replaced by any learned transformation function LTF₁ that aims to predict a feature vector pfi considering past feature vectors {fⱼ}_{jε[W;i-1]} and that aims to train a learned neural network model via backpropagation of computed errors by a loss function LF₁.

Figure 4 shows an embodiment wherein the RNN is implemented and figure 7 shows an embodiment wherein a learned transformation function LTF₁ replacing the RNN is represented.

According to one embodiment, the loss function LF₁ comprises the computation of a distance d₁(oᵢ₊₁, fᵢ₊₁). The distance d₁(oᵢ₊₁, fᵢ₊₁) is computed between each predicted feature vector pfᵢ₊₁ calculated by the RNN and each extracted feature vector fᵢ₊₁ calculated by the convolutional neural network CNN. In that implementation pfᵢ₊₁ and fᵢ₊₁ corresponds to a same-related time sequence video frame vfᵢ₊₁.

According to one embodiment, when the loss function LF₁ is a contrastive loss function CLF₁, it comprises computing a contrastive distance Cd₁ between:
▪ a first distance d₁(oᵢ₊₁, fᵢ₊₁) computed between a predicted feature vector oᵢ₊₁ and an extracted feature vector fᵢ₊₁ for a same-related time sequence video frame vfᵢ₊₁ and;
▪ a second distance d₂(oᵢ₊₁, fₖ) computed between the predicted feature vector oᵢ₊₁ corresponding to the feature vector fᵢ₊₁ outputted from the CNN and one reference extracted feature vector Rfₙ that should be uncorrelated from the video frame vfᵢ.

In practice, reference extracted feature vector Rfₙ is ensured to be uncorrelated from extracted feature vector fi by only considering frames that are separated by a sufficient period of time from the video frame vfᵢ, or by considering frames acquired from a different video entirely. It means that "n" is chosen below a predefined number of the current frame "i", for instance n < i-5. In the present invention, an uncorrelated time window UW is defined in which reference extracted feature vector Rfₙ may be chosen.

The reference feature vectors Rfₙ that are used to define the contrastive distance function Cd₁ may correspond to frames of the same video sequence VS₁ from which the video frames vfᵢ are extracted or frames of another video sequence VSᵢ.

In one example, the contrastive loss function CLF₁ randomly sample other frames vfₖ, or feature vectors fₖ, of the video sequence VS₁ in order to define a set of reference extracted feature vectors Rfᵢ.

The combination of reference feature vectors Rfᵢ taken from random other video clips in the dataset, along with feature vectors from the same video clip but outside the predefined "correlation time window" CW, provides the neural network with a mix of "easy" and "hard" tasks. This mix ensures the presence of a useful training signal throughout the training procedure.

The invention allows extracting reference feature vectors and comparing their distance to a predicted vector, versus that predicted vector's distance to a target vector. This process allows for desired properties of the neural network to be expressed in a mathematical, differentiable loss function, which can in turn be used to train the neural network.

The training of the neural network allows distinguishing a near-future video frame from a randomly selected reference frame in order to increase the distinction of highlight in a video sequence from other video frame sequences.

Figure 4 shows a first block named Pos(Pairs) that aims to calculate a first distance d₁ between the extracted feature vector fₖ₊₁ and a predicted feature vector pfₖ₊₁. This first block evaluates distances between the set of positive pairs. A second a block named Neg(Pairs) represents the function that computes distances d₂ between the set of extracted feature vectors fₖ₊₁ and reference feature vectors Rfₖ.

The contrastive loss function CLF₁ compares d1 and d2 in order to generate a computed error between d1 and d2 that is backpropagated to the weights of the neural network.

To train the model, a positive pair is required, as well as at least one negative pair to contrast against this positive pair. Using a sequence length of 5 like in Figure 4 leads us to consider:
▪ the positive pair by computing a distance d₁ between a true future features f5 and a predicted future feature pf₅;
▪ the negative pair by computing a distance d₂ between a feature vector fₙ from any other random video frame vfₙ of one video sequence VS₁ in a predefined dataset and a predicted future feature pf₅.

According to one embodiment, the loss function LF₁ comprises aggregating each computed contrastive distance Cd₁ for increasing the accuracy of the detection of relevant video frames vfₚ.

The resulting error Er from the contrastive computed distance is backpropagated to update the parameters of the neural network model. This backpropagation allows finding relevant video frame vfₚ when the neural network is trained efficiently.

The loss function LF₁, or more particularly, the contrastive loss function CLF₁ comprises a projection module PROJ for computing the projection of each feature vector fi or oi. The predicted feature vector pfi may undergo an additional, and possible nonlinear, transformation to a projection space. A second step corresponds to the computation of each predicted component of the feature vector in order to generate the predicted feature vector pfi. This predicted feature vector aims to define a pseudo target for defining an efficient training process of the neural network.

The objective of the loss function LF₁ is to push the predicted future features and true future features closer together, while pushing the predicted future features further away from the features of some other random image in the dataset.

Figure 7 represents a schematic view of the way that a contrastive loss function CLF₁ may be implemented. The computation of an error Er is backpropagated into the CNN and the RNN.

### Uncorrelated time Window

The invention allows aggregating feature vectors in a set of reference feature vector {Rfᵢ}ₗ which are supposed to be uncorrelated with a feature vector fₖ which is currently processed by the learned transformation function LTF₁ and the contrastive loss function CLF₁. According to one configuration, an uncorrelated window UW corresponds to the video frames occurring outside a predefined time period centered on the timestamp tₖ of the frame vfₖ. It means that the frame vfₖ₋₇, vfₖ₋₈, vfₖ₋₉, vfₖ₋₁₀, etc. may be considered as uncorrelated with vfₖ, because they are far from the event occurring on frame vfₖ. In this case, the uncorrelated time window UW is defined by the closest frame from the frame vfₖ which is in that example the frame vf₋₇, this parameter is called the depth of the uncorrelated time window UW.

Considering, for example, a duration of 1 second between each video frame Δ(tₖ, tₖ₋₁) = 1s with a sampling frequency of 1/25 with a video at 25 frames per second. In that example, it may be considered that the frame vfₖ₋₇ is uncorrelated from the video frame vfₖ. In this example, it is assumed that 7 second before the video frame vfₖ, the frame vfₖ₋₅ is different from the frame vfₖ in which an event may occur. In such a configuration, d₂(fₖ₋₇, fₖ) is considered as a negative pair, in the same way that d₂((Rfᵢ, fₖ) is considered a negative pair. In this example, the distance d₁(fₖ₋₇, fₖ), d₁(fₖ₋₆, fₖ), d₁(fₖ₋₄, fₖ), d₁(fₖ₋₄, fₖ), d₁(fₖ₋₃, fₖ), d₂(fₖ₋₂, fₖ), d₂(fₖ₋₁, fₖ) may be defined as positive pairs or not but they cannot be defined as negative pairs. In this example, only frames d₁(fₖ₋₄, fₖ), d₁(fₖ₋₃, fₖ), d₂(fₖ₋₂, fₖ), d₂(fₖ₋₁, fₖ) may be defined as positive pairs according to the definition of a correlation time window CW.

This configuration is well adapted for a video sequence VS₁ of a video game VG₁. But this configuration may be adapted for another video game VG₂ or for another video sequence VS₂ of a same video game for example corresponding to another level of said video game.

### Correlation window

The invention allows aggregating feature vectors in a set of correlated feature vector {Cfᵢ}ₗ which are supposed to be correlated with a feature vector fₖ which is currently processed by the learned transformation function LTF₁ and the contrastive loss function CLF₁. According to one configuration, a correlation time window CW corresponds to a predefined time period centered on the timestamp tₖ of the frame vfₖ. It means that the frame vfₖ₋₁, vfₖ₋₂, vfₖ₋₃, vfₖ₋₄ may be considered as correlated with vfₖ. In this case, the correlation window CW is defined by the farthest frame from the frame vfₖ which is here the frame vf₋₄ in that example, this parameter is called the depth of the correlation time window CW.

According to one embodiment, the depth of the correlation time window CW and the depth of the uncorrelated time window may be set at the same value.

The method according to the invention comprises a controller that allows configuring the depth of the correlation time window CW and the depth of the uncorrelated time window UW. For instance, in a specific configuration they may be chosen with the same depth.

This configuration may be adapted to the video game or information related to an event rate. For instance, in a car race video game, numerous events or changes may occur in a short time window. In that case, the correlation time window CW may be set at 3s including positive pairs inside the range [tₖ₋₃; tₖ] and/or excluding negative pairs from this correlation time window CW. In other examples, the time window is longer, for instance 10s including positive pairs into the range [tₖ₋₁₀; tₖ] and/or excluding negative pairs from this correlation time window CW.

## Claims

1. Method for automatically generating a multimedia event on a screen by analyzing a video sequence, wherein the method comprises:
▪ Acquiring a plurality of time-sequenced video frames ({vf_{k,kε[1},_{N]}} from an input video sequence (VS₁);
▪ Applying a learned convolutional neural network (CNN_{L}) to each video frame (vfᵢ₋₁, vfᵢ, vfᵢ₊₁) of the acquired time-sequenced video frames for outputting feature vectors (fᵢ₋₁, fᵢ, fᵢ₊₁), said learned convolutional neural network (CNN_{L}) being learned by a method for training a neural network that comprises :
∘ Applying a convolutional neural network (CNN₁) to some video frames (..., vf'ᵢ₋₁, vf'ᵢ, vf'ᵢ₊₁, ...) for extracting time-sequenced feature vectors (..., f'ᵢ₋₁, f'ᵢ, f'ᵢ₊₁, ...);
∘ Applying a learned transformation function (LTF₁) that produces at least one predictive feature vector (pfᵢ₊₁) from a subset (SUBi) of the extracted time-sequenced feature vectors (...f'ᵢ₋₂, f'ᵢ₋₁, f'ᵢ,...);
▪ Classifying each feature vector (fᵢ₋₁, fᵢ, fᵢ₊₁) according to different classes (C{i}_{iε[1,P]}) in a feature space, said different classes defining a video frame classifier (VfC) ;
▪ Extracting the video frames (vfₚ) that correspond to feature vectors (fₚ) which is classified in one predefined class (C{q}) of the classifier (VfC).

2. Method according to any of claim 1, wherein
▪ Applying a learned convolutional neural network (CNN_{L}) to each video frame (vfᵢ₋₁, vfᵢ, vfᵢ₊₁) of the acquired time-sequenced video frames for outputting feature vectors (fᵢ₋₁, fᵢ, fᵢ₊₁) is following by a step of:
▪ applying a learned transformation function (LTF₁) to each the feature vectors (fᵢ₋₁, fᵢ, fᵢ₊₁), said learned convolutional neural network (CNN_{L}) and learned transformation function (LTF₁) being learned by a method for training a neural network that comprises :
∘ Applying a convolutional neural network (CNN₁) to some video frames (..., vf'ᵢ₋₁, vf'ᵢ, vf'ᵢ₊₁, ...) for extracting time-sequenced feature vectors (..., f'ᵢ₋₁, f'ᵢ, f'ᵢ₊₁, ...);
∘ Applying a learned transformation function (LTF₁) that produces at least one predictive feature vector (pfᵢ₊₁) from a subset (SUBi) of the extracted time-sequenced feature vectors (...f'ᵢ₋₂, f'ᵢ₋₁, f'ᵢ,...);
▪ Classifying each feature vector (fᵢ₋₁, fᵢ, fᵢ₊₁) according to different classes (C{i}_{iε[1,P]}) in a feature space, said different classes defining video frame classifier (VfC) or a video sequence classifier (VsC);
▪ Extracting a new video sequence (nVS₁) comprising at least one video frame (vfₚ) that correspond to feature vectors which are classified in one predefined class (C{p}) of the video sequence classifier (VsC) or the video frame classifier (VfC).

3. Method according to any one of claims 1 to 2, wherein the method comprises:
▪ Detecting at least one feature vector (fₚ) corresponding to at least one predefined class (C{p}) from a video frame classifier (VfC) or a video sequence classifier (VsC);
▪ Generating a new video sequence automatically (nVS₁) comprising at least one video frame (vfₚ) corresponding to the at least detected feature vector (fₚ) according to the predefined class (C{p}), said video sequence (VS) having a predetermined duration (T₁₀ₛ, T₂₀ₛ, T₃₀ₛ).

4. Method according to any one of claims 1 to 3, wherein the video sequence (VS) comprises:
▪ aggregating video sequences corresponding to a plurality of detected feature vectors (fₚ) according to at least one predefined class (C{q}), said video sequence (VS) having a predetermined duration (T₁₀ₛ, T₂₀ₛ, T₃₀ₛ) and/or;
▪ aggregating video frames (vfₚ) corresponding to a plurality of detected feature vector (fₚ) according to at least two predefined classes (C{q}), said video sequence (VS) having a predetermined duration (T₁₀ₛ, T₂₀ₛ, T₃₀ₛ).

5. Method according to any one of claims 2 to 4, wherein the extracted video (VS) is associated with :
▪ a predefined audio sequence which is selected in accordance with at least one predefined class (C{p}) of the classifier (VfC, VsC) ; or
▪ a predefined visual effect which is applied in accordance with at least one predefined class (C{p}) of the classifier (VfC, VsC).

6. Method according to any of previous claims, wherein the method for training a neural network, comprises:
▪ Acquiring a first set of videos (SET₁);
▪ Acquiring a plurality of time-sequenced video frames ({vf_{k,kε[1,N]}}) from a first video sequence (VS₁) from the above-mentioned first set of videos (SET₁);
▪ Applying a convolutional neural network (CNN₁) to each video frame (..., vf_{i-1,} vfᵢ, vfᵢ₊₁, ...) of the acquired time-sequenced video frames for extracting time-sequenced feature vectors (..., fᵢ₋₁, fᵢ, fᵢ₊₁, ...);
▪ Applying a learned transformation function (LTF₁) that produces at least one predictive feature vector (pfᵢ₊₁) from a subset (SUBᵢ) of the extracted time-sequenced feature vectors (...f'ᵢ₋₂, f'ᵢ₋₁, f'ᵢ,...), said learned transformation function (LTF₁) being repeated for a plurality of subsets (SUBi) ;
▪ Calculating a loss function (LF₁), said loss function (LF₁) comprising a computation of a distance (d₁(pfᵢ₊₁, fᵢ₊₁)) between each predicted feature vector (pfᵢ₊₁) and each extracted feature vector (fᵢ₊₁) for a same-related time sequence video frame (Vfᵢ₊₁);
▪ Updating the parameters of the convolutional neural network (CNN₁) and the parameters of the learned transformation function (LTF₁) in order to minimize the loss function (LF₁).

7. Method according to claim 6, wherein each video of the first set of videos (SET₁) is video extracted from a computer program having a predefined images library and code instructions that, when applied by said computer program, produced a time-sequenced video scenario.

8. Method according to claim 6, wherein the time-sequenced video frames (vfₚ) are extracted from a video at a predefined interval of time.

9. Method according to claim 6, wherein the subset (SUBi) of the extracted time-sequenced feature vectors (...f'ᵢ₋₂, fᵢ₋₁, fᵢ,...) is a selection of a predefined number of time-sequenced feature vectors (fᵢ₋₃, fᵢ₋₂, fᵢ₋₁, fᵢ) and the at least one predictive feature vector (pfᵢ₊₁) correspond(s) to the next feature vector in the sequence of the selected times-sequences feature vectors (fᵢ₋₃, fᵢ₋₂, fᵢ₋₁, fᵢ).

10. Method according to claim 6, wherein the loss function (DF1) comprises aggregating each computed distance.

11. Method according to claim 6 or 10, wherein the loss function (DF1) comprises computing a contrastive distance (Cd₁) between:
▪ a first distance d₁(pfᵢ₊₁, fᵢ₊₁) computed between a predicted feature vector (pfᵢ₊₁) and an extracted feature vector (fᵢ₊₁) for a same-related time sequence video frame (Vfᵢ₊₁) and;
▪ a second distance d₂(pfᵢ₊₁, fₖ) computed between the predicted feature vector (pfᵢ₊₁) for the same related time sequence video frame (Vfᵢ₊₁) and
∘ one extracted feature vector (fₙ) corresponding to a previous time sequence video frame (vfₙ), said previous time sequence video frame (vfₙ) being selected beyond or after a predefined time window centered on the instant of the same related time sequence video frame (Vfᵢ₊₁) or ;
∘ one extracted feature vector (fₙ') corresponding to a time sequence video frame (vfₙ') of another video sequence (VS'),
and comprises aggregating each contrastive distance (Cd₁) computed for each time sequence feature vector (vfᵢ), said aggregation defining a first set of inputs (INP₁).

12. Method according to claim 6 or 10, wherein the loss function (DF1) comprises computing a contrastive distance (Cd₁) between:
▪ a first distance d₁(pfᵢ₊₁, fᵢ₊₁) computed between a predicted feature vector (pfᵢ₊₁) and an extracted feature vector (fᵢ₊₁) for a same-related time sequence video frame (Vfᵢ₊₁) and;
▪ a second distance d₂(pfᵢ₊₁, fₖ) computed between the predicted feature vector (pfᵢ₊₁) for the same related time sequence video frame (Vfᵢ₊₁) and one extracted feature vector (fₙ) chosen in an uncorrelated time window (UW), said uncorrelated time window (UW) being defined out of a correlation time window (CW), said correlation time Window (CW) comprising at least a predefined number of time sequenced feature vectors in a predefined time window centered on the instant of the same related time sequence video frame (Vfᵢ₊₁),
and comprises aggregating each contrastive distance (Cd₁) computed for each time sequence feature vector (vfᵢ), said aggregation defining a first set of inputs (INP₁).

13. Method according to any one of claims 6 to 12, wherein the parameters of the convolutional neural network (CNN₁) and/or the parameters of the learned transformation function (LTF₁) are updated by considering the first set of inputs (INP₁) in order to minimize the distance function.

14. Method according to any one of claims 6 to 13, wherein the learned transformation function (LTF₁) is a recurrent neural network (RNN).

15. A computer-readable medium that comprises software code portions for the execution of the method according to any one of the claims 1 to 15.
